# EUROPEAN PATENT APPLICATION

(11) **EP 3 076 347 A1**
(43) Date of publication of application: **05.10.2016**
(21) Application number: 16155823.4
(22) Date of filing: 16.02.2016
(51) Int. Cl.: G06Q 10/06

(54) **WORK SUPPORT DEVICE AND WORK SUPPORT METHOD**

(30) Priority: 31.03.2015 JP 2015070500
(71) Applicant: Yokogawa Electric Corporation, Tokyo 180-8750 (JP)
(72) Inventor: Yatabe, Chikara, Tokyo, 180-8750 (JP); Ishii, Yosuke, Tokyo, 180-8750 (JP)
(74) Representative: Henkel, Breuer & Partner

(57) **Abstract**

A work support device includes a data manager configured to manage data obtained from a plant, a model manager configured to manage a normal model representing a normal state of the plant and an abnormal model representing an abnormal state of the plant, an anomaly determiner configured to determine a possibility of an abnormality of the plant by using the data managed by the data manager, the normal model, and the abnormal model, the normal model and the abnormal model being managed by the model manager, and an anomaly notifier configured to notify to outside a determination result of the anomaly determiner.

## Description

### BACKGROUND

### Technical Fields

The disclosure relates to a work support device and a work support method.

Priority is claimed on Japanese Patent Application No. 2015-70500, filed March 31, 2015, the contents of which are incorporated herein by reference.

### Related Art

In a plant and a factory (hereinafter called simply "plant" as a generic name of them), a DCS (Distributed Control System) is established, and an advanced automatic operation is implemented. In the distributed control system, field devices (for example, a measurement device, a manipulation device, a display device, an alarm device, and other devices) and a controller controlling the field devices are connected to each other through a communication means.

Recently, a PAM (Plant Asset Management) system is often installed with the distributed control system so as to increase efficiency of the plant to a maximum level. The plant asset management system performs facility maintenance and predictive maintenance of devices and apparatuses installed in the plant, and the plant asset management system maintains and manages the facility in an appropriate state over a long time.

In the field of the plant where a plant control system which performs management control of the plant is established by the distributed control system and the plant asset management system, a worker (engineer) performs maintenance and check of facilities such as field devices. In a control room established in a part of the plant, an operating staff (operator) monitors an operation status of the plant, and performs work of the operation. An administrator (plant manager) who is an ultimate responsibility person is engaged in the plant. The worker and the operator, if needed, receive instructions from the administrator or obtain approval, and perform their work. For example, in a case that an abnormality occurs in the plant, the worker draws up a work procedure manual for eliminating the abnormality, and works in accordance with the work procedure manual after obtaining an approval of the administrator.

An example of the conventional work support system is disclosed in Japanese Unexamined Patent Application Publication No. 2012-248157 and Japanese Unexamined Patent Application Publication No. 2010-176331. For example, a facility-check work support system, which can focus on checking a facility having a high possibility that an abnormality will occur, is disclosed in Japanese Unexamined Patent Application Publication No. 2012-248157. Moreover, a maintenance work support system, which enables improvement in reliability of a food manufacturing plant and reduction of maintenance cost, is disclosed in Japanese Unexamined Patent Application Publication No. 2010-176331.

In a case that an abnormality occurs in the plant, the plant in which the plant control system is established transmits alarm information representing it from a field device to the plant asset management system and the distributed control system. The alarm information is transmitted after the abnormality occurs. For this reason, when the alarm information is transmitted, in order to eliminate the abnormality, the plant including the plant control system sometimes needs to be stopped. The stop of the plant increases opportunity loss. Therefore, it is necessary to avoid the stop of the plant as much as possible.

The plant control system is designed so that operation of a normal state can be continued basically, and it is not designed in consideration of abnormalities which seldom occur. For this reason, the plant control system is not designed to perform quickly and safely a work (unusual work) which is performed only when abnormality occurs. For this reason, if the abnormality of the plant occurs, the unusual work for eliminating the abnormality will take a long time. As the result, there is a possibility that opportunity loss increases.

As described above, in a case that the worker works in the plant, the worker cannot work dogmatically, and needs to get the approval of the administrator. For this reason, in order to conduct the unusual work, the worker needs to draw up the work procedure manual and needs to get the approval of the administrator. However, in a case that the worker and the administrator cannot communicate smoothly, a lot of time is taken for creating the work procedure manual or for obtaining the approval of the administrator. As the result, there is a possibility that opportunity loss increases.

### SUMMARY

A work support device may include a data manager configured to manage data obtained from a plant, a model manager configured to manage a normal model representing a normal state of the plant and an abnormal model representing an abnormal state of the plant, an anomaly determiner configured to determine a possibility of an abnormality of the plant by using the data managed by the data manager, the normal model, and the abnormal model, the normal model and the abnormal model being managed by the model manager, and an anomaly notifier configured to notify to outside a determination result of the anomaly determiner.

Further features and aspects of the present disclosure will become apparent from the following detailed description of exemplary embodiments with reference to the attached drawings.

### BRIEF DESCRIPTION OF THE DRAWINGS

FIG. 1 is a drawing typically illustrating whole configuration of a work support system including a work support device in an embodiment of the present invention.
FIG. 2 is a block diagram illustrating a main configuration of the work support device in the embodiment of the present invention.
FIG 3 is a block diagram illustrating an internal configuration of the CG information processor disposed in the work support device in the embodiment of the present invention.
FIG. 4A and FIG. 4B are drawings for describing the model information used by the work support system in the embodiment of the present invention.
FIG. 5 is a drawing illustrating an example of the work screen displayed on the terminal device in the embodiment of the present invention.
FIG. 6A and FIG 6B are drawings illustrating an example of the map displayed on the terminal device in the embodiment of the present invention.
FIG. 7 is a drawing illustrating a specific example of the communication visualization region and the timeline display region arranged in the work screen in the embodiment of the present invention.
FIG. 8A to FIG 8C are drawings for describing a generating method of the work procedure manual in the embodiment of the present invention.
FIG. 9 is a flow chart illustrating an abnormality determination operation performed by the work support system in the embodiment of the present invention.
FIG. 10 is a drawing for describing a whole operation of the work support system in the embodiment of the present invention.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a work support device and a work support method, which can avoid the stop of the plant as much as possible, and can shorten the stop time as much as possible even if the plant is stopped.

The work support device and the work support method of the present embodiment will be described in detail below with reference to drawings.

### [Work Support System]

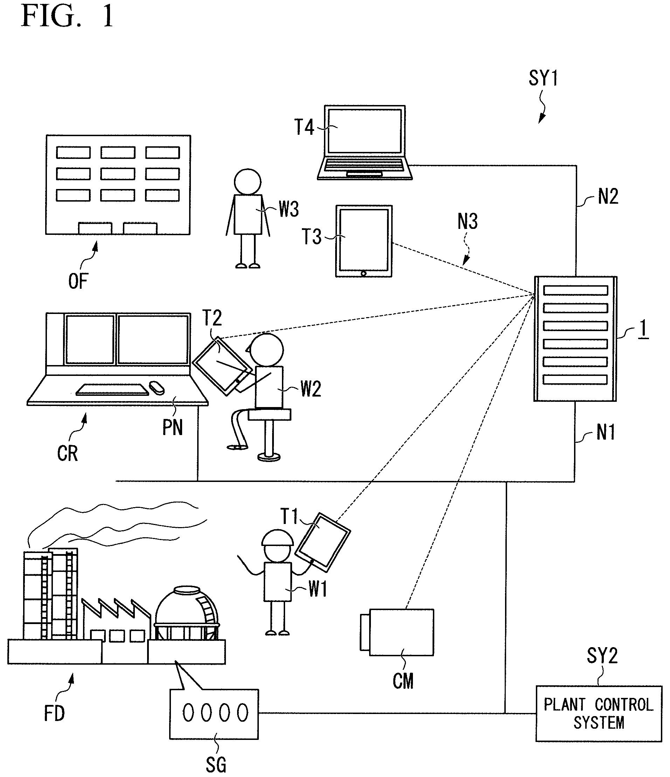

FIG. 1 is a drawing typically illustrating whole configuration of a work support system including a work support device in an embodiment of the present invention. As shown in FIG 1, the work support system SY1 is equipped with a sensor group SG, a plant control system SY2, an operation monitoring panel PN, terminal devices T1 to T4, a camera CM, and a work support device 1. The work support system SY1 is a system which supports work required for operation of the plant.

In FIG 1, a worker (engineer) W1, an operating staff (operator) W2, and an administrator (plant manager) W3 are shown as members engaged in a work which is necessary for operating the plant. The worker W1 maintains and checks various types of devices and facilities which are disposed in a field FD of the plant. In a control room CR established in a part of the plant, the operator W2 monitors an operation status of the plant, and performs a work of the operation by using the operation monitoring panel PN. The administrator W3 stands by in an office (management center) OF, and performs work for giving instructions and approval to the worker W1 or the operator W2 if needed.

The plant includes an industrial plant such as a chemical industrial plant, a plant managing and controlling a wellhead (for example, a gas field and an oil field), a plant managing and controlling a generation of electric power (for example, water power, fire power, and nuclear power), a plant managing and controlling a power harvesting (for example, solar power and wind power), a plant managing and controlling water supply and sewerage systems, a dam, and so on.

The sensor group SG includes two or more sensors (for example, field devices) installed in the field of the plant. The plant control system SY2 is equipped with a distributed control system (DCS) and a plant asset management system (PAM). The plant control system SY2 performs an automatic operation of the plant, and performs maintenance management of the plant. The operation monitoring panel PN is installed in the control room CR, and displays monitoring information obtained from the plant control system SY2, and transmits instructions from the operator W2 to the plant control system SY2. The sensor group SG, the plant control system SY2, and the operation monitoring panel PN are connected to the work support device 1 through the network N1. The network N1 is a wired network placed in the plant.

For example, the terminal devices T1 to T3 are tablet type terminal devices, and the terminal device T4 is a note type or desktop type terminal device. As shown in FIG 1, the terminal device T1 is operated by the worker W1, the terminal device T2 is operated by the operator W2, and the terminal devices T3 and T4 are operated by the administrator W3. A camera CM is a camera for monitoring installed in the field FD of the plant. The terminal device T4 is connected to the work support device 1 through a wired network N2. The terminal devices T1 to T3 and the camera CM are connected to the work support device 1 through a wireless network N3 positioned in the plant.

The work support device 1 supports the work required for the operation of the plant by using data obtained through the networks N1, N2, and N3. For example, the work support device 1 determines a possibility of an abnormality of the plant, and transmits the determination result to the terminal devices T1 to T4. Thereby, the work support device 1 notifies a sign of the abnormality of the plant to the worker W1, the operator W2, and the administrator W3. Based on the notice, the worker W1, the operator W2, and the administrator W3 perform the work for avoiding a stop of the plant and for continuing operation of the plant. That is, the works of the worker W1, the operator W2, and the administrator W3 are supported by the work support device 1. The work support device 1 provides environment where the worker W1, the operator W2, and the administrator W3 can communicate smoothly, so that each work can be performed correctly and quickly.

### [Work Support Device]

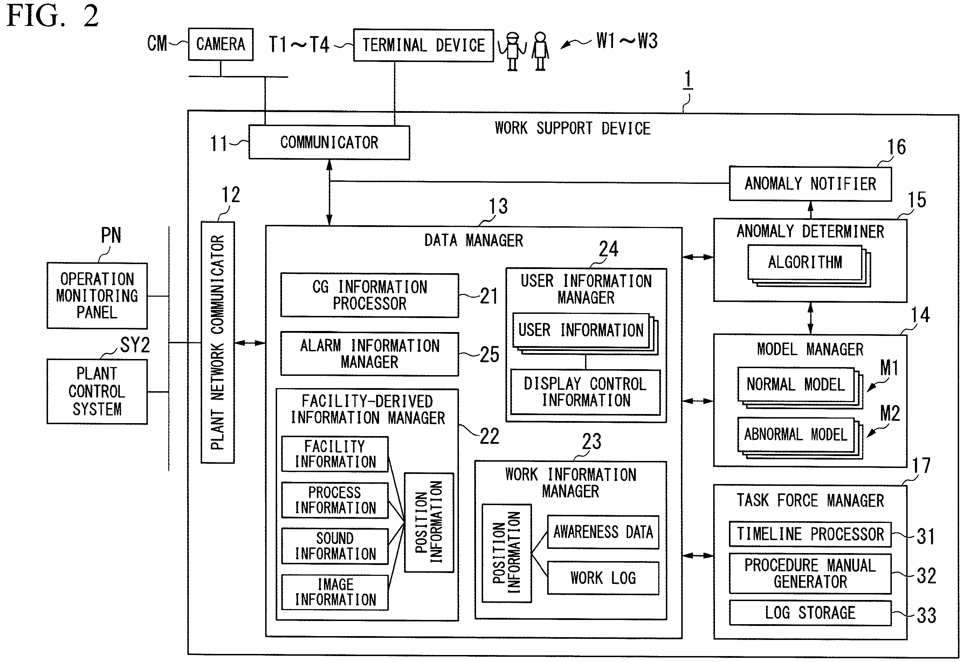

FIG. 2 is a block diagram illustrating a main configuration of the work support device in the embodiment of the present invention. In FIG. 2, parts that correspond to those in FIG. 1 are assigned the same reference numerals. As shown in FIG. 2, the work support device 1 of the present embodiment is equipped with a communicator 11, a plant network communicator 12, a data manager 13, a model manager 14, an anomaly determiner 15, an anomaly notifier 16, and a task force manager 17.

The communicator 11 communicates between the camera CM installed in the plant and the terminal devices T1 to T4 (terminal devices operated by the worker W1, the operator W2, and the administrator W3). For example, the communicator 11 has a function of a wireless access point. For this reason, the communicator 11 can communicate with the terminal devices T1 to T3 and the camera CM through the wireless network N3 shown in FIG 1. The plant network communicator 12 is connected to the network N 1 shown in FIG. 1, and the plant network communicator 12 communicates with the plant control system SY2 and the operation monitoring panel PN through the network N1.

The data manager 13 includes a CG information processor 21, a facility-derived information manager 22, a work information manager 23, a user information manager 24, and an alarm information manager 25. The data manager 13 manages various types of data (information) used by the work support device 1. The CG information processor 21 generates a CG (Computer Graphics) image which is to be displayed on the terminal devices T1 to T4 in accordance with information transmitted from the terminal devices T1 to T4. For example, the CG information processor 21 generates a three-dimensional CG image. The CG information processor 21 may generate a two-dimensional CG image, and the CG information processor 21 may generate an image to which a photograph and an animation are inserted in all or in part. Although details will be described later, the CG information processor 21 collaborates with the task force manager 17, generates a work screen (virtual space), and displays the work screen on the terminal devices T1 to T4. The worker W1, the operator W2, and the administrator W3 work with reference to the work screen while communicating with each other.

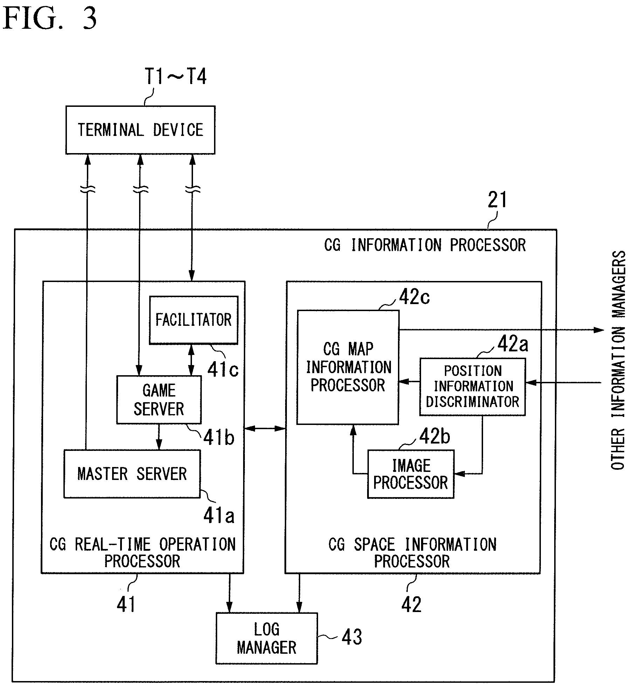

FIG. 3 is a block diagram illustrating an internal configuration of the CG information processor disposed in the work support device in the embodiment of the present invention. As shown in FIG 3, the CG information processor 21 includes a CG real-time operation processor 41, a CG space information processor 42, and a log manager 43. The CG real-time operation processor 41 includes a master server 41 a, a game server 41b, and a facilitator 41c. The CG real-time operation processor 41 generates a CG image which is to be displayed on the terminal devices T1 to T4 in real time, like a network game. Specifically, the CG real-time operation processor 41 processes operation information transmitted from the terminal devices T1 to T4, receives a CG map information which is output from the CG space information processor 42, and displays it in an operation space. In a case that the space information is updated by an operation of the worker W1, the operator W2, or the administrator W3, the CG real-time operation processor 41 outputs the contents to the CG space information processor 42.

The CG space information processor 42 includes a position information discriminator 42a, an image processor 42b, and a CG map information processor 42c. The CG space information processor 42 generates space information. Specifically, the CG space information processor 42 receives information from another information manager (the facility-derived information manager 22 to the alarm information manager 25) disposed in the data manager 13, and the CG space information processor 42 checks whether the information is associated with position information. In a case that the received information is an image for the purpose of generating a map, the CG space information processor 42 generates a CG object by combining images, and outputs it to the CG map information processor 42c. If information including abnormality is attached, the CG space information processor 42 outputs information for displaying to the CG real-time operation processor 41 with the position information, and the CG space information processor 42 updates the CG space in real time. The log manager 43 records and manages time series information processed by the CG real-time operation processor 41, and time series information processed by the CG space information processor 42.

The facility-derived information manager 22 manages information (first data) derived from facilities disposed in the plant. Specifically, the facility-derived information manager 22 manages facility information which is information about a facility disposed in the plant, with position information. The facility-derived information manager 22 manages process information, sound information, image information, and so on, which are collected through the communicator 11 or the plant network communicator 12, with the position information.

For example, the facility-derived information manager 22 performs processing described below.
- Receiving information from the sensor group SG (refer to FIG. 1), and calculating difference between the information and a normal state.
- Obtaining model information accumulated in the log manager 43 in order to calculate the difference.
- Outputting sensing information to the CG information processor 21.
- Outputting time series information to the log manager 43.

The work information manager 23 manages information (second data) inputted by the worker W1 who works in the field FD of the plant. Specifically, the work information manager 23 manages awareness data (data representing matters about which the worker W1 worried while working) which is input into the terminal device T1 by the worker W1, with the position information. The work information manager 23 manages a work log representing contents of the work performed by the worker W1 in the field FD of the plant, with the position information. The position information is information representing a position where the worker W1 inputs the awareness data and the work log into the terminal device T1. The work information manager 23 generates a list of the awareness data, and outputs the list to the log manager 43.

In order that the work support device 1 can be appropriately used by the user (the worker W1, the operator W2, and the administrator W3), the user information manager 24 manages user information which is various types of information about the user. Specifically, the user information manager 24 manages utilization authority information which represents utilization authority of the work support device 1 with respect to the user, and various types of setting information (for example, setting information for setting up a display) with respect to each user. The alarm information manager 25 manages alarm information generated by the work support device 1. Specifically, the alarm information manager 25 receives the alarm information notified from the anomaly notifier 16, and outputs the alarm information to the CG information processor 21.

The model manager 14 manages model information which includes a normal model M1 representing a normal state of the plant and an abnormal model M2 representing an abnormal state of the plant. The model information is information used according to a request from the anomaly determiner 15, when the anomaly determiner 15 determines a possibility of the abnormality of the plant. In accordance with the determination result of the anomaly determiner 15, the model manager 14 performs processing of newly generating the normal model M1 or the abnormal model M2, or processing of updating the normal model M1 or the abnormal model M2 which have been already generated.

The determination result of the anomaly determiner 15 is not always clearly divided into a result which represents that the plant is normal, and a result which represents the plant is abnormal. For example, there is a case that the determination result of the anomaly determiner 15 is a result which represents that it cannot determine whether the plant is normal or abnormal. In a case that the determination result of the anomaly determiner 15 is such a result, based on instructions from the operator W2 or the administrator W3 of the plant, the model manager 14 newly generates the normal model M1 or the abnormal model M2, or updates the normal model M1 or the abnormal model M2 which have been already generated.

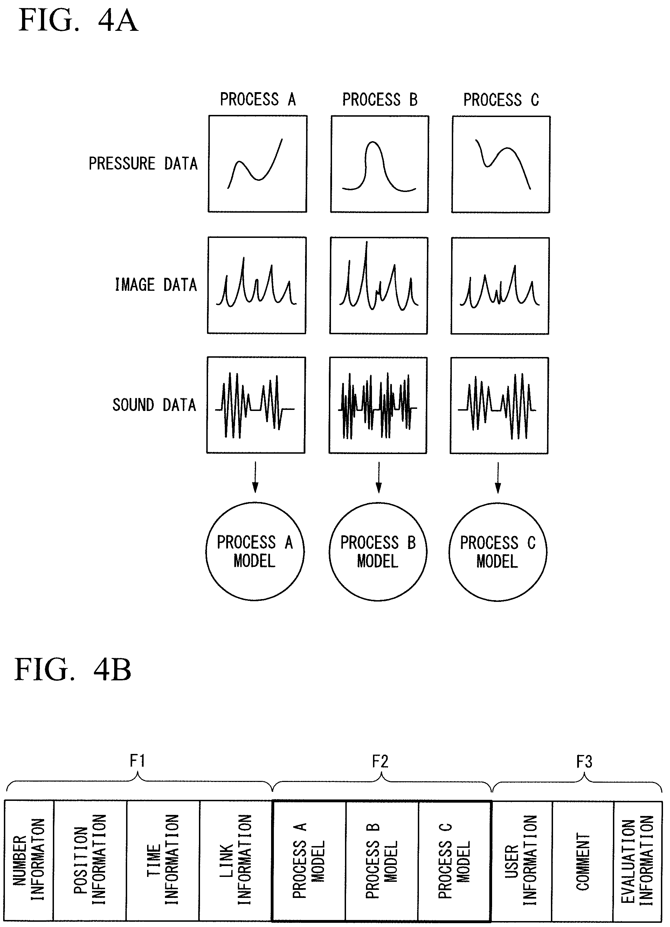

FIG. 4A and FIG. 4B are drawings for describing the model information used by the work support system in the embodiment of the present invention. FIG 4A is a drawing for describing an example of a model generating method. FIG. 4B is a drawing illustrating an example of contents of the model information. The model manager 14 generates the model for each process by using various types of information obtained from the plant. FIG 4A illustrates an example in which the model of three processes ("process A", the "process B", and "process C") by using three types of time series data (pressure data, image data, and sound data).

For example, in a case of generating the model of "process A", first, the model manager 14 collects the pressure data, the image data, and sound data about "the process A". Next, the model manager 14 extracts a feature of each data collected if needed, and compresses the each data. Next, the model manager 14 calculates a correlation value of each data (or correlation value of the feature of the each extracted data), and makes the calculated correlation value be the model of "process A". The obtained model of the "process A" is classified into the normal model M1 or the abnormal model M2 based on the determination result of the anomaly determiner 15 (or based on instructions from the operator W2 or the administrator W3 of the plant). The model of "process B" and the model of "process C" are also obtained by the same processing.

As shown in FIG. 4B, the model information managed by the model manager 14 has a field F1 in which information associated with the model is stored, a field F2 in which the model is stored, and a field F3 in which information added to the model is stored. The field F1 stores "reference number", "position information", "time information", "link information", and so on. The field F2 stores the models (models of "process A", "process B", and "process C") generated by the model manager 14 by using the method which is described by using FIG 4A, for example. The field F3 stores "user information", "comment", "evaluation information", and so on.

The "reference number" is a number which is added to each of the model information and which is defined uniquely, in order to manage and search the model information easily. The "position information" is information which represents a position, in the plant, of the model stored in the field F2. The "time information" is information which represents time (update history) when the model stored in the field F2 was updated. The "link information" is information for obtaining an assumption event, in a case that the assumption event is managed by the data manager 13. The assumption event is a situation which may happen in a case that the abnormality of the plant occurs.

The "user information" is information which specifies the user who input the "comment." For example, the "user information" may be a user's name, and may be a user ID uniquely assigned to the each user. The "comment" is information (second data) which represents a matter input by the worker W1 who works in the field FD of the plant, and which is felt by the worker W1 while the worker W1 works. The "evaluation information" is information input by a person who refers to the contents of the "comment", for example, for evaluating whether the "comment" is useful or not, or whether it is right or not.

The anomaly determiner 15 determines a possibility of the abnormality of the plant by using the data managed by the data manager 13 and the model information (the normal model M1 and the abnormal model M2) managed by the model manager 14. For example, the anomaly determiner 15 calculates a correlation value by obtaining various types of information (for example, the pressure data, the image data, and the sound data which are shown in FIG. 4A) from the data manager 13. The anomaly determiner 15 determines the possibility of the abnormality of the plant by comparing the calculated correlation value with the normal model M1 and the abnormal model M2 which are obtained from the model manager 14. The anomaly determiner 15 is also capable of determining the possibility of the abnormality of the plant based on whether a number of turning points (or a magnitude of a deviation) of the data, which is obtained from the data manager 13 within a fixed period of time, is settled in a predetermined acceptable value.

In a case that the anomaly determiner 15 determines the possibility of the abnormality of the plant, the anomaly determiner 15 collects the data (data obtained from the data manager 13) used for the determination, and outputs the determination result to the model manager 14. In a case that the anomaly determiner 15 determines the possibility of the abnormality of the plant, the anomaly determiner 15 outputs the determination result to the anomaly notifier 16.

The anomaly notifier 16 notifies outside the determination result which is output from the anomaly determiner 15. Specifically, in a case that the determination result which is output from the anomaly determiner 15 represents an abnormality, the anomaly notifier 16 transmits, to the terminal devices T1 to T4, an alarm representing that the alarm occurred, with the position information which represents a place where the abnormality occurred. The anomaly notifier 16 outputs the alarm, which was transmitted to the terminal devices T1 to T4, also to the alarm information manager 25 of the data manager 13.

The task force manager 17 collaborates with the CG information processor 21, generates the work screen (virtual space), and displays the generated work screen on the terminal devices T1 to T4. A user works while communicating with reference to the work screen. The task force manager 17 has a timeline processor 31, a procedure manual generator 32, and a log storage 33, and generates the work screen by using the data managed by the data manager 13. In the example shown in FIG. 2, although the CG information processor 21 and the task force manager 17 are disposed separately, the task force manager 17 may be included in the CG information processor 21.

The timeline processor 31 displays conversation held by users on the work screen. Specifically, the timeline processor 31 displays, on the work screen, messages (messages which are input by the worker W1, the operator W2, and the administrator W3 by operating the terminal devices T1 to T4) transmitted from the terminal devices T1 to T4 in an order of being transmitted. At this time, the timeline processor 31 obtains the user information managed by the user information manager 24 of the data manager 13, and specifies a user who input the message.

The procedure manual generator 32 displays, on the work screen, a work procedure manual which represents a procedure of the work conducted in the plant based on instructions from a user, and generates the work procedure manual. Specifically, the procedure manual generator 32 converts the data, which is output from the CG information processor 21, into a form which can be displayed on the work procedure manual, inputs a message, which was transmitted from the terminal devices T1 to T4, into the work procedure manual, and performs other processes, in order to generate the work procedure manual.

The log storage 33 stores the contents of the conversation (message) and the work procedure manual which were displayed on the work screen. In a case that a work performed last time and a work performed this time are a work of the same place, the log storage 33 provides a list that a user can select a content of work quickly and easily. The list provided from the log storage 33 is displayed by the procedure manual generator 32. The content of the work, which is selected by an operation of the user, is read out of the log storage 33.

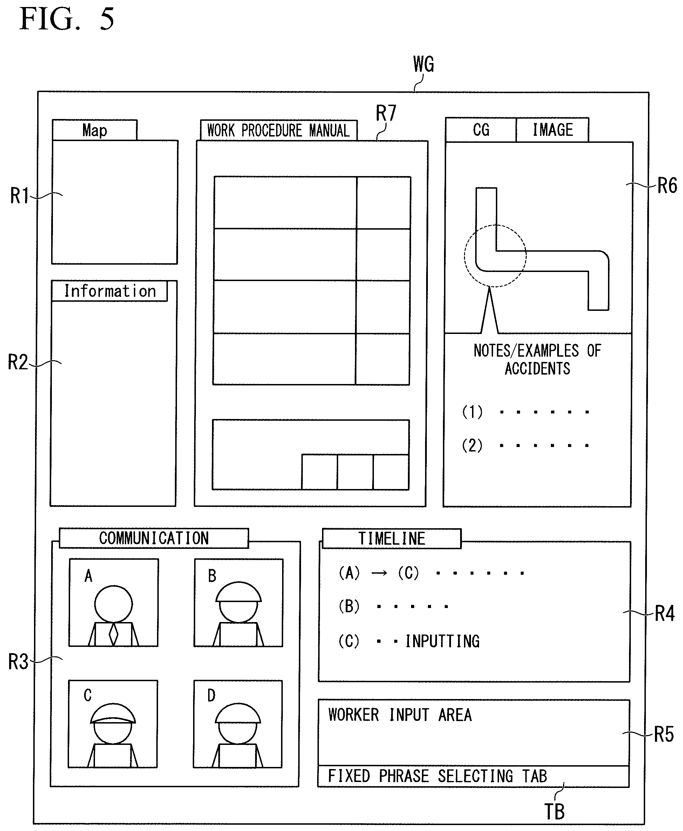

FIG 5 is a drawing illustrating an example of the work screen displayed on the terminal device in the embodiment of the present invention. As shown in FIG. 5, a map display region R1, a variety-of-information display region R2, a communication visualization region R3, a timeline display region R4, an information input region R5, a facility situation display region R6, and a work procedure manual region R7 are arranged in the work screen WG. In order to understand easily, the work screen WG displayed on the terminal device T1 operated by the worker W1, who works in the field FD of the plant, will be described below as an example.

A map (for example, a two-dimensional map), in which information indicating a position of the terminal device T1 (worker W1) and information indicating a situation of circumference thereof are superimposed, is displayed on the map display region R1. The map displayed on the map display region R1 is generated by the task force manager 17 of the work support device 1. Maps, which are different from each other with respect to the terminal devices T1 to T4, are generated. The map displayed on the map display region R1 may be a three-dimensional map.

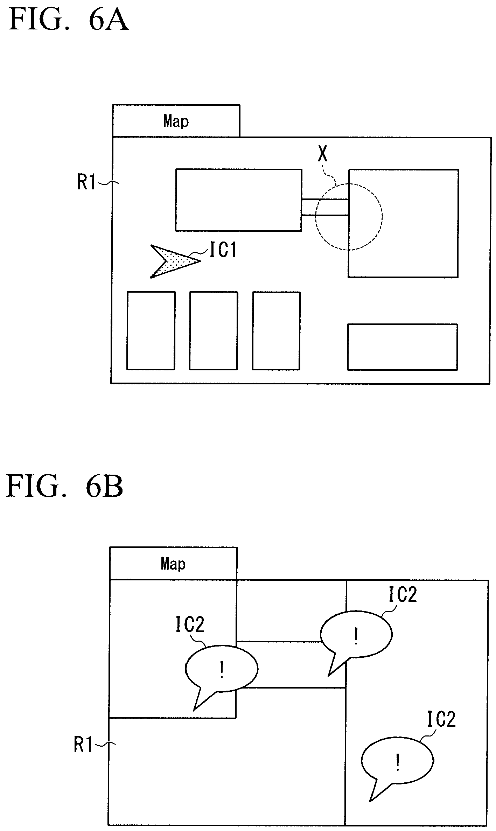

FIG 6A and FIG 6B are drawings illustrating an example of the map displayed on the terminal device in the embodiment of the present invention. As shown in FIG. 6A, information indicating the position of the terminal device T1 (worker W1) is shown by an arrow-shaped icon IC1 in the map displayed on the terminal device T1 (worker W1). The facilities installed in the circumference of the terminal device T1 (worker W1) is shown by a simple figure (for example, rectangle-shaped figure).

The map displayed on the map display region R1 can be expanded and reduced in accordance with an operation of the worker W1. For example, if the worker W1 performs an operation (for example, pinch-out operation) of choosing and expanding a region X in the map shown in FIG. 6A, as shown in FIG 6B, the region X is expanded and displayed in the map display region R1. In FIG. 6B, an icon IC2 representing an exclamation mark "!" in a balloon is displayed. The icon IC2 represents that it is a portion at which detail information of a facility (for example, information which represents parts of a facility) can be checked. If the worker W1 performs an operation (for example, tap operation) of selecting any of icons IC2, the detail information corresponding to the selected icon IC2 is displayed on the variety-of-information display region R2 or the facility situation display region R6.

Various types of useful information are displayed on the variety-of-information display region R2 when working by using the work screen WG. For example, in a case that the icon IC2 shown in FIG 6B is selected, the detail information corresponding to the selected icon IC2 is displayed by a numerical value or a text. The information displayed on the variety-of information display region R2 may be arbitrary information, and a display form thereof may also be arbitrary.

An image or an avatar which shows an appearance of the user is displayed in the communication visualization region R3. The communication visualization region R3 is arranged in order to easily specify a transmission destination of a message and to easily understand a transmission source and a transmission destination of the message. In the example shown in FIG. 5, avatars of four users (user A to user D) are displayed. If the worker W1 selects at least one person to which a message is to be transmitted, out of the users displayed on the communication visualization region R3, the transmission destination of the message is specified. Display contents of the communication visualization region R3 are generated by the task force manager 17 of the work support device 1, and the same display contents are basically generated with respect to the terminal devices T1 to T4.

Conversations held by the users (messages transmitted and received between users) are displayed in the timeline display region R4 in time series. The message, with which information representing the transmission source and the transmission destination of the message is associated, is displayed in the timeline display region R4 one by one for every line. For example, the lower the message displayed in the timeline display region R4, the newer the message is.

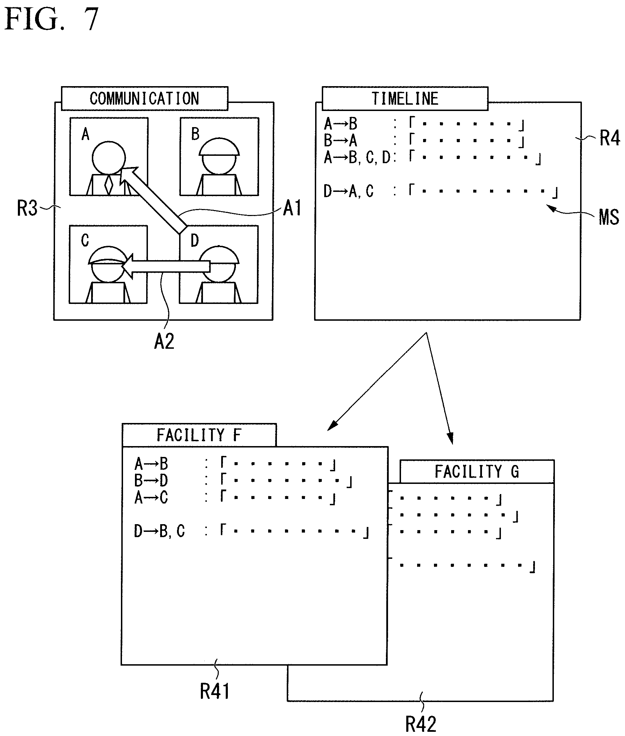

FIG. 7 is a drawing illustrating a specific example of the communication visualization region and the timeline display region arranged in the work screen in the embodiment of the present invention. In the example shown in FIG. 7, out of the avatars of the four users (user A to user D) displayed in the communication visualization region R3, the avatar of the user D is an avatar which shows an appearance of the worker W1.

For example, the worker W 1 traces the screen from the user D toward the user A displayed on the communication visualization region R3, and traces the screen from the user D toward the user C. In this case, an arrow A1 extending from the avatar of the user D to the avatar of the user A and an arrow A2 extending from the avatar of the user D to the avatar of the user C are displayed in the communication visualization region R3. The worker W1 can easily understand the transmission source and the transmission destination of the message by these arrows A1 and A2.

If the worker W1 inputs a message into the information input region R5 shown in FIG. 5 after performing the operation described above, the message MS shown in FIG. 7 is displayed in the timeline display region R4. The message "D → A, C" displayed in the left of the colon sign ":" of the message MS means that the transmission source of the message is the user D and the transmission destinations of the message are the users A and C. A message is displayed in the right of the colon sign ":" of the message MS. For this reason, if the worker W1 refers to the display contents of the timeline display region R4, the worker W1 can easily understand the transmission source and the transmission destination of the message and the contents of the message.

As shown in FIG 7, the timeline display region R4 can be divided into timeline display regions R41 and R42 by an operation of the worker W1. For this reason, for example, in a case that a conversation held by two or more users is divided into two or more subjects during the conversation, it is also possible to divide the timeline display region R4 into the timeline display regions R41 and R42. Thereby, it is also possible to divide messages with respect to each subject.

The information input region R5 is a region into which the worker W1 inputs a message by operating the terminal device T1. A fixed phrase selecting tab TB is arranged in the information input region R5, and a fixed phrase can be input easily. If the terminal device T1 has an input auxiliary function which enables to input a sound, the worker W1 can input a message into the information input region R5 by a sound, without operating the terminal device T1.

A CG image of a facility installed in the plant, information required for an operation of a facility installed in the plant, information which a user should be careful of, or information which is needed when generating the work procedure manual are displayed in the facility situation display region R6. In the example shown in FIG 5, a CG image of a pipeline, notes and examples of accidents about a bend part of the pipeline (portion enclosed with the dashed line), and so on are displayed. The CG image displayed in the facility situation display region R6 is generated by the CG information processor 21 (refer to FIG. 2).

The work procedure manual region R7 is used in order to generate the work procedure manual which represents a procedure of works performed in the plant based on instructions from a user. When the work screen WG is displayed on the terminal device T1, an empty work procedure manual (work procedure manual in an initial state where the work procedure is not stored at all) is displayed in the work procedure manual region R7. In the example shown in FIG 5, the empty work procedure manual, which is displayed in the work procedure manual region R7, is illustrated.

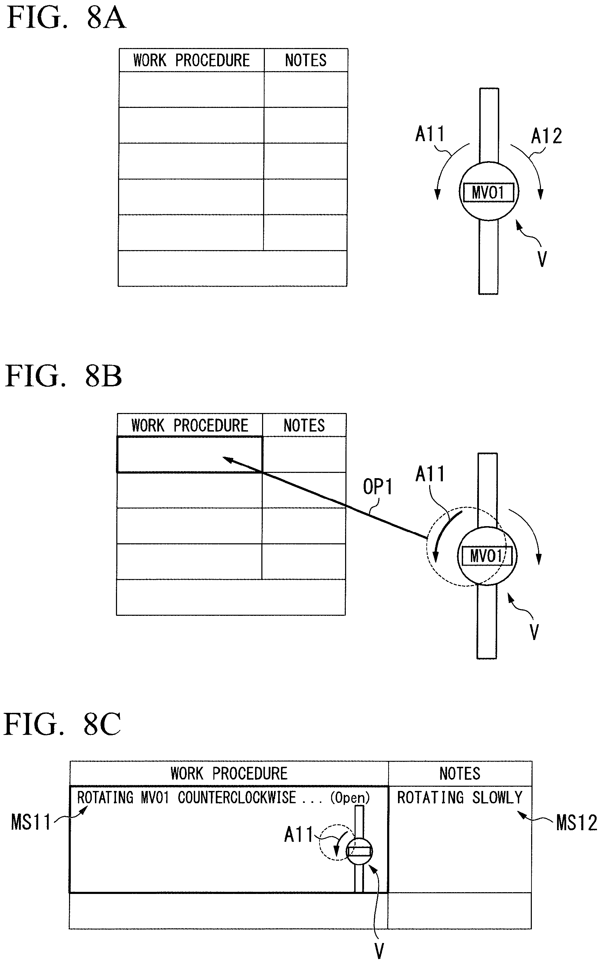

FIG. 8A to FIG. 8C are drawings for describing a generating method of the work procedure manual in the embodiment of the present invention. The work procedure manual is generated by performing an operation (drag-and-drop operation) of moving an image and a figure, which are displayed in the work screen WG, to the work procedure manual region R7, or by repeating an operation of inputting a character string into the work procedure manual region R7. The work procedure manual can be generated by one user independently, and can be also generated by two or more users collaborating with each other.

In a case that the work procedure manual is generated by two or more users, the operation described above is performed by the each user engaged in generation of the work procedure manual. For example, the worker W1 moves an image or a figure, which is displayed in the work screen WG of the terminal device T1, to the work procedure manual region R7, and the operator W2 moves an image or a figure, which is displayed in the work screen WG of the terminal device T2, to the work procedure manual region R7.

As shown in FIG 8A, as an example, there is a case that the empty work procedure manual is displayed in the work procedure manual region R7, and a CG image V representing a manual-type valve mounted to a pipeline is displayed in the facility situation display region R6. If a user touches the CG image V displayed in the facility situation display region R6, arrows A11 and A12 which show a rotation direction of the valve are displayed in the facility situation display region R6.

As shown in FIG 8B, a user selects the arrow A11 displayed in the facility situation display region R6, and performs operation (drag-and-drop operation OP1) of moving the selected arrow A11 to the work procedure manual displayed in the facility situation display region R6. In this case, as shown in FIG. 8C, the CG image V to which the arrow A11 was added and a message MS11 representing "Rotating a valve (MV01) counterclockwise ... (Open)" are stored as a work procedure of the first column of the work procedure manual. The message MS11 is automatically generated by processing of the procedure manual generator 32 of the task force manager 17 shown in FIG. 2.

As shown in FIG. 8C, if the user inputs a character string, for example, a message MS12 "Rotating slowly" can be stored as notes of the first column of the work procedure manual. By repeating such operation, the work procedure manual is generated sequentially. The user information managed by the user information manager 24 of the data manager 13 is obtained. If each column of the work procedure manual is displayed by color classification with respect to each user who worked, it can be easily understood which user conducted which work. After generating the work procedure manual, for example, the administrator W3 approves the work procedure manual by operating the terminal device T3. Thereby, the generation of the work procedure manual is completed.

The each region (the map display region R1 to the work procedure manual region R7) arranged in the work screen WG shown in FIG. 5 is expanded or reduced, or a overlapping order of the each region is changed in accordance with an operation of the user. For this reason, for example, in a case that the user works in accordance with the generated work procedure manual, the user can expand the work procedure manual region R7 where the work procedure manual is displayed, and it can be also displayed in a front side of the work screen WG.

For example, the work support device 1 is implemented by a computer and a workstation. The functions (the communicator 11 to the task force manager 17) of the work support device 1 described above are implemented by running a program for implementing the each function by a CPU (Central Processing Unit) disposed in the computer. That is, the functions described above in the work support system are implemented by software and hardware resources collaborating with each other.

For example, the program which implements the functions is distributed in a state where the program was recorded in a recording medium such as a CD-ROM or a DVD (registered trademark) -ROM which can be read by a computer, or is distributed through an external network such as the Internet. The functions are implemented by software, by reading the program out of the recording medium and installing the program, or by installing the program downloaded through the external network.

### [Operation of Work Support System]

Next, an operation of the work support system SY 1 will be described. Hereinafter, first, an operation (abnormality determination operation) of determining a possibility of an abnormality of the plant, which is performed by the work support device 1, will be described, and next, a whole operation of the work support system SY1 will be described.

### <Abnormality Determination Operation>

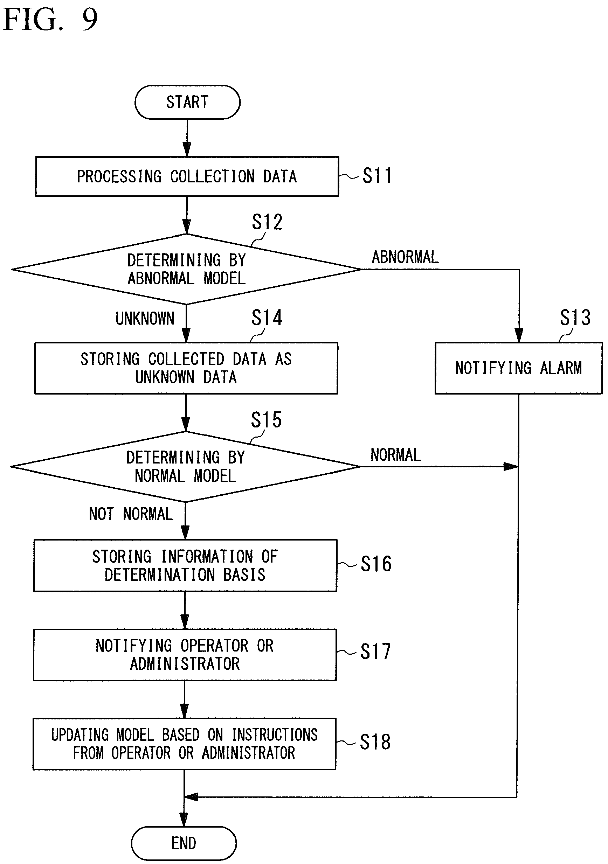

FIG. 9 is a flow chart illustrating an abnormality determination operation performed by the work support system in the embodiment of the present invention. Processing of the flow chart shown in FIG. 9 is performed whenever the anomaly determiner 15 of the work support device 1 obtains data from the data manager 13 (for example, at a fixed time interval). For example, the data from the plant is obtained at a predetermined frequency or irregularly and managed by the data manager 13.

If the processing is started, first, the anomaly determiner 15 calculates information which is needed when determining the possibility of the abnormality of the plant by using the data obtained from the data manager 13 (Step S11). For example, in a case that the anomaly determiner 15 obtains various types of data (for example, the pressure data, the image data, the sound data which are shown in FIG 4A) from the data manager 13, the anomaly determiner 15 calculates a correlation value of them.

Next, the anomaly determiner 15 compares the information calculated in Step S11 with the abnormal model M2 read out of the model manager 14, and the anomaly determiner 15 determines whether or not the plant is in an abnormal state (Step S12). If it is determined that the plant is in the abnormal state (if the determination result of Step S12 is "ABNORMAL"), the anomaly determiner 15 outputs the determination result to the anomaly notifier 16. The anomaly notifier 16 transmits, to the terminal devices T1 to T4, an alarm representing that an abnormality occurred, and outputs the alarm to the alarm information manager 25 of the data manager 13 (Step S13). If the alarm representing that an abnormality occurred has been transmitted, the processing of the flow chart shown in FIG. 9 is ended.

On the other hand, if it is unknown whether or not the plant is in the abnormal state (if the determination result of Step S12 is "unknown"), the anomaly determiner 15 stores data, which is collected from the data manager 13, into the model manager 14 as unknown data (Step S14). The data stored into the model manager 14 is to be used when generating a new model.

Next, the anomaly determiner 15 compares the information calculated in Step S11 with the normal model M1 read out of the model manager 14, and the anomaly determiner 15 determines whether or not the plant is in a normal state (Step S15). If it is determined that the plant is in the normal state (if the determination result of Step S15 is "NORMAL"), the processing of the flow chart shown in FIG. 9 is ended, without notifying the alarm from the anomaly notifier 16 to the terminal devices T1 to T4, and to the alarm information manager 25 of the data manager 13.

On the other hand, if it is determined that the plant is not in the normal state (if the determination result of Step S15 is "NOT NORMAL"), the anomaly determiner 15 stores, into the model manager 14, information which is a basis of the determination (for example, a result of a statistical mathematical analysis) (Step S16). The anomaly determiner 15 outputs the determination result of Step S15 to the anomaly notifier 16. Thereby, the information representing that the plant is not in normal state is notified to the operator W2 or the administrator W3 (Step S17).

If the notification is performed, the operator W2 or the administrator W3 checks the situation of the field. For example, the operator W2 or the administrator W3 goes to the place determined that it is not in the normal state and checks it directly, or the operator W2 or the administrator W3 checks an image obtained from the camera CM installed in the plant. By doing this work, the operator W2 or the administrator W3 determines whether the plant is in the normal state or in the abnormal state.

After the work is ended, based on instructions from the operator W2 or the administrator W3, the model manager 14 newly generates the normal model M1 or the abnormal model M2, or the model manager 14 updates the normal model M1 or the abnormal model M2 which has already been generated (Step S18). For example, in a case that instructions representing that the plant is in the abnormal state are made from the operator W2 or the administrator W3, the model manager 14 generates the abnormal model M2 by using the collected data stored in the model manager 14 (data stored as the unknown data) at Step S14. On the other hand, in a case that instructions representing that the plant is in the normal state are made from the operator W2 or the administrator W3, the model manager 14 generates the normal model M1 by using the collected data stored in the model manager 14 at Step S14. If the processing of generating the normal model M1 or the abnormal model M2 is completed, the processing of the flow chart shown in FIG. 9 is ended.

Hereinafter, a specific example of the abnormality determination operation performed by the work support device 1 is described. Here, an example of determining a possibility of an abnormality of the plant based on color of liquid stored in a tank is described. The color of the liquid stored in the tank is red if it is in the normal state, and the color is green if it is in the abnormal state. The model manager 14 manages the normal model M1 which has information representing "the color of the liquid is red" and the abnormal model M2 which has information representing "the color of the liquid is green".

First, as an example, there is a case that data representing that the color of the liquid stored in the tank is green is collected by the anomaly determiner 15. In this case, because the abnormal model M2 managed by the model manager 14 has information representing "the color of the liquid is green", the determination result of the determination processing (Step S12) performed by using the abnormal model M2 is "ABNORMAL". The anomaly notifier 16 transmits, to the terminal devices T1 to T4, the alarm representing that the abnormality occurred (Step S 13). In this way, in a case that the abnormality can be clearly determined, the anomaly notifier 16 notifies the alarm.

Next, as an example, there is a case that data representing that the color of the liquid stored in the tank is orange is collected by the anomaly determiner 15. In this case, the determination result of the determination processing (Step S12) performed by using the abnormal model M2 is "UNKNOWN". This is because the abnormal model M2 managed by the model manager 14 has the information representing "the color of the liquid is green", and it cannot determine that it is abnormal.

Moreover, the determination result of the determination processing (Step S 15) performed by using the normal model M1 is "NOT NORMAL". This is because the normal model M1 managed by the model manager 14 has the information representing "the color of the liquid is red", and it cannot determine that it is normal. The anomaly notifier 16 notifies, to the operator W2 or the administrator W3, the information representing that the plant is not in the normal state (Step S 17).

Based on the notification, the operator W2 or the administrator W3 checks the color of the liquid stored in the tank, and determines whether the plant is in the normal state or in the abnormal state. In accordance with the determination, in a case that the operator W2 or the administrator W3 instructs that the plant is in the abnormal state, for example, the model manager 14 generates the abnormal model M2. On the other hand, in a case that the operator W2 or the administrator W3 instructs that the plant is in the normal state, for example, the model manager 14 generates the normal model M1 (Step S18). In this way, in a case that it cannot determine whether it is normal or abnormal, information representing that it cannot determine is notified to the operator W2 or the administrator W3, and the normal model M1 or the abnormal model M2 is generated based on instructions of the operator W2 or the administrator W3.

### <Whole Operation>

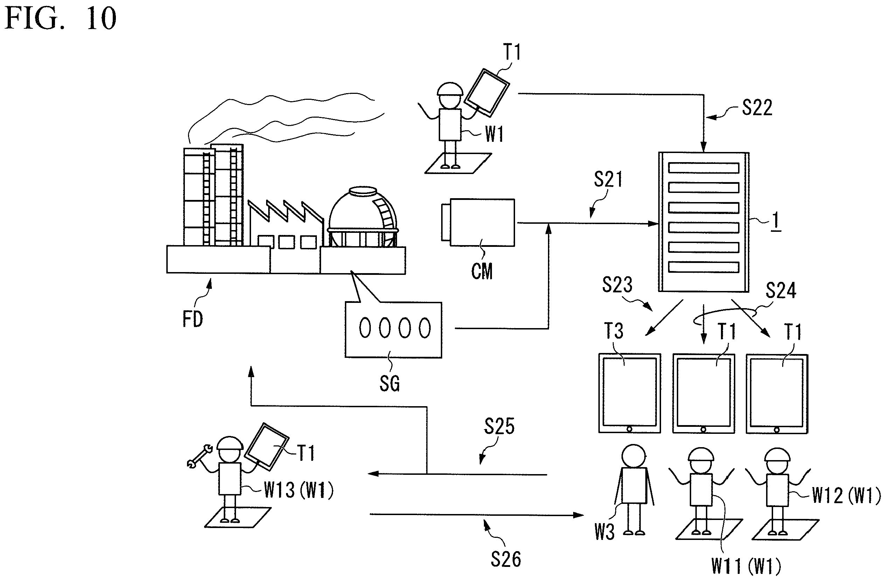

FIG. 10 is a drawing for describing a whole operation of the work support system in the embodiment of the present invention. In FIG. 10, parts (member) that correspond to those (member) in FIG. 1 are assigned the same reference numerals. While the plant is operated, the work support device 1 collects and manages, at a predetermined frequency or irregularly, the data obtained by the sensor group SG and the camera CM which are installed in the field of the plant (Step S21). The work support device 1 also collects and manages data (for example, awareness data) which is input by the worker W1, who works in the field of the plant, by operating the terminal device T1 (Step S22). As shown in FIG 2, the data is managed with the position information by the work information manager 23 and the user information manager 24 of the work support device 1, and used for the determination of the anomaly determiner 15.

The data input by the worker W1 by operating the terminal device T1 is transmitted to the terminal device T3 operated by the administrator W3 (Step S23). Thereby, the administrator W3 can know the information transmitted from the worker W1. The administrator W3 contacts the worker W1 and other workers W1 (workers W11 and W12), and operats the terminal device T3 to invite the workers W1 to the virtual space which is provided by the work support device 1 (Step S24). Thereby, the work screen WG shown in FIG 5 is displayed on the terminal device T1 operated by the worker W1 and the terminal device T3 operated by the administrator W3.

The worker W1 and the administrator W3 operate the terminal device T1 and the terminal device T3 respectively, and consider a work required in order to prevent an abnormality which may occur in the plant or to eliminate the abnormality which occurred in the plant, while communicating with each other by the method described by using FIG. 7. The worker W1 and the administrator W3 operate the terminal device T1 and the terminal device T3 respectively, and they generate the work procedure manual by the method described by using FIG 8, while communicating with each other by the method described by using FIG. 7. If the work procedure manual is generated, the administrator W3 approves the generated work procedure manual by operating the terminal device T3. Thereby, the generation of the work procedure manual is completed.

If the generation of the work procedure manual is completed, the work support device 1 transmits the generated work procedure manual to related persons of the work (for example, the worker W1 (W13) in FIG. 10) (Step S25). Then, the worker W 13 works in accordance with the procedure specified by the work procedure manual, referring to the work procedure manual displayed on the terminal device T1. If the work is completed, the terminal device T1 is operated by the worker W13 who worked, and a work report is generated. The work report is transmitted from the terminal device T1 operated by the worker W13 to the terminal device T3 operated by the administrator W3 (Step S26).

If the work report is received, after checking the completion of the work based on the contents of the work report, the administrator W3 operates the terminal device T3 to perform a final approval. The data manager 13 (work information manager 23) of the work support device 1 manages a work record of the work conducted by the worker W13. In this way, the work required in order to prevent the abnormality which may occur in the plant or to eliminate the abnormality which occurred in the plant is conducted.

Hereinafter, an example of the whole operation of the work support system SY1 will be described. A whole operation (first whole operation) when finishing a work of a pipeline-cleaning and operating the plant, and a whole operation (second whole operation) under a situation where a hole is likely to be formed in the pipeline will be described below.

### «First Whole Operation»

The worker W1 conducts the pipeline-cleaning in a periodical maintenance of the plant. Specifically, the pipeline-cleaning is conducted by a facility sequence of the pipeline-cleaning and a proceduralized work of a person accompanying it. If the pipeline-cleaning is completed, the worker W1 performs a test run after the completion of the work.

While performing the test run, for example, in a case that the worker W1 is aware of an abnormality such as unusual sound which is slightly different from usual sound, the worker W1 operates the terminal device T1 to input the awareness into the terminal device T1. The work information manager 23 of the work support device I manages the data representing the awareness, which is input into the terminal device T1, with information representing a time and a position which are input. For example, the facility-derived information manager 22 of the work support device 1 manages time series data which represents a vibration of the pipeline detected by a sensor mounted on the pipeline and image data of the pipeline captured by the camera CM.

If the anomaly determiner 15 obtains the data managed by the facility-derived information manager 22 and the work information manager 23, the anomaly determiner 15 determines that doubt of an abnormality is high, based on a deviation between the information obtained from the data and the normal model, and the awareness of the worker. In this case, the anomaly determiner 15 outputs the determination result to the anomaly notifier 16, and the anomaly notifier 16 notifies an alarm to the terminal device T3 of the administrator W3.

If the anomaly notifier 16 notifies the alarm to the terminal device T3, the administrator W3 contacts with the worker W1 who is in the field of the pipeline-cleaning, the worker W1 (for example, the worker W 13 shown in FIG. 10) who knows a lot about the facility, and the operator W2 who is working in control room CR. Thereby, for example, the worker W1 and the operator W2 can check that the pressure of the pipeline monitored in the control room CR is slightly different from usual, by using the terminal devices T1 to T3 of the four persons.

A candidate of a doubtful part is pointed out by the worker W 13 (or notified from the anomaly notifier 16), and a list thereof is generated and displayed on the terminal devices T1 to T3. Thereafter, the worker W1 checks it in the field, while receiving advices from the three persons through the terminal devices T1 to T3. The worker W1 selects and checks an abnormal part one by one, and finishes coping with it after that. For example, in a case that the worker W1 copes with a slight looseness of a flange and an abnormal behavior is settled, the worker W1 finishes coping with it. If the abnormal behavior is settled, the worker W1 specifies an abnormal part.

For example, the position information of the abnormal part and the information once stored in the data manager 13 of the work support device 1 are associated with each other with an operation of completing the work as a trigger, and become a set of data. The model manager 14 generates a new abnormal model M2 by using the set of data. The model manager 14 manages the generated new abnormal model M2. After that, in a case that the same phenomenon (sound and vibration which are slightly different from usual) occurs, the anomaly determiner 15 determines an abnormality based on the newly generated abnormal model M2.

### «Second Whole Operation»

The worker W1 in the field has been aware that an indicated value of a meter mounted on the pipeline is slightly lower than usual, and aware that there is sound, which is different from usual, around there. In this case, the worker W1 operates the terminal device T1 to input the awareness into the terminal device T1. The work information manager 23 of the work support device 1 manages the data of the awareness which is input into the terminal device T1, with information representing a time and a position which are input (Step S22 in FIG. 10).

The work support device 1 transmits the data, which is input by the worker W1 1 by operating the terminal device T1, to the terminal device T3 which is operated by the administrator W3 (Step S23 in FIG 10). Thereby, the administrator W3 can know the information (information which represents that the indicated value of the meter is different from usual and there is an abnormal sound) which is transmitted from the worker W1. The administrator W3 uses the terminal device T3 to contact the workers W1 (the workers W11 and W12) who knows a lot about the abnormality of the pipeline, and operates the terminal device T3 to invite the workers W1 to the virtual space provided by the work support device 1 (Step S24 in FIG 10). Thereby, the work screen WG shown in FIG. 5 is displayed on the terminal device T1 operated by the workers W11 and W12 and the terminal device T3 operated by the administrator W3.

When the administrator W3 and the workers W11 and W12 exchange information, for example, there is a case that there is no record in the place which is concerned this time, but it is found out that it is similar to a situation before a hole was formed when the hole has formed in another pipeline at somewhere else. Thereby, the administrator W3 determines to cope with the pipeline, before a hole is formed.

The administrator W3 operates the terminal device T3 to invite the worker W11 (worker who input the awareness) to the virtual space provided by the work support device 1. The workers W1, W11, and W12 operate the terminal devices T1 and T2 to communicate with each other, and one of the workers W1, W11, and W12 generates the work procedure manual by using a CG representing a situation of the field. If the work procedure manual is generated, the administrator W3 operates the terminal device T3 to approve the generated work procedure manual. Thereby, the generation of the work procedure manual is completed.

The work support device 1 notifies, to related persons of peripheral facilities, that the work (unusual work) is to be conducted in accordance with the generated work procedure manual. An off-limits area and a flow line which is temporarily set are reflected in the map displayed on the terminal possessed by each one (Step S25 of FIG. 10). The worker W13 works in accordance with the procedure specified by the work procedure manual, while referring to the work procedure manual displayed on the terminal device T1. If the work is completed, the worker W13 who worked operates the terminal device T1 to generate a work report. The terminal device T1 operated by the worker W13 transmits the work report to the terminal device T3 operated by the administrator W3 (Step S26 of FIG. 10).

If the terminal device T3 receives the work report, the administrator W3 operates the terminal device T3 to perform a final approval after checking the completion of the work based on the contents of the work report. The data manager 13 (work information manager 23) of the work support device 1 manages a work record of the work conducted by the worker W13.

As described above, in the present embodiment, the anomaly determiner 15 determines a possibility of an abnormality of the plant by using the data managed by the data manager 13 and the normal model M1 and the abnormal model M2 which are managed by the model manager 14, and the anomaly notifier 16 notifies the determination result of the anomaly determiner 15 to outside. Thereby, because a sign of the abnormality of the plant can be known, if the worker copes with appropriately, it is possible to avoid the stop of the plant.

Moreover, in the present embodiment, the task force manager 17 generates the work screen WG which is the virtual space where the members (the worker W1, the operator W2, and the administrator W3), who are engaged in the work which is necessary for operating the plant, communicate with each other by using the data managed by the data manager 13. The terminal devices T1 to T3, which are operated by the members, display the work screen WG. Thereby, the members, who are engaged in the work which is necessary for operating the plant, can communicate smoothly. For this reason, for example, even if the plant is stopped, it is possible to shorten the stop time as much as possible.

Although the work support device and the work support method according to embodiments of the present invention have been described above, the present invention is not restricted to the above-described embodiments, and can be freely modified within the scope thereof. For example, the work support device 1 can be also used in any field of a PA (Process Automation) field, a FA (Factory Automation) field, and a BA (Building Automation) field.

For example, in the PA field, the work support device 1 can be used for management and abnormality-detection in an iron mill, a food plant, and a semiconductor plant where continuation processing and batch processing are conducted, other than an oil plant, a petrochemical plant, and a chemical plant. Moreover, in the FA field, the work support device 1 can be used for obtaining an activity condition of a robot (specifically, management and abnormality-detection of a robot which uses a model using a combination of digital data such as huge ON/OFF control data and analog data such as a sound of operation).

In the BA field, the work support device 1 can be used for management and abnormality-detection of a building or the like. Moreover, other than the building, the work support device 1 can be used for leisure facilities such as an amusement park, a pool, a skiing area, and a golf course, and facilities such as a farm, and an aquafarm, and infrastructure systems such as a railroad, a road, and an electricity, and public facilities such as a museum, and a book warehouse.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A work support device comprising:
a data manager configured to manage data obtained from a plant;
a model manager configured to manage a normal model representing a normal state of the plant and an abnormal model representing an abnormal state of the plant;
an anomaly determiner configured to determine a possibility of an abnormality of the plant by using the data managed by the data manager, the normal model, and the abnormal model, the normal model and the abnormal model being managed by the model manager; and
an anomaly notifier configured to notify to outside a determination result of the anomaly determiner.

2. The work support device according to claim 1, wherein
the model manager is configured to generate the normal model or the abnormal model based on the determination result of the anomaly determiner.

3. The work support device according to claim 1, wherein
the model manager is configured to update the normal model or the abnormal model, which has been already generated, based on the determination result of the anomaly determiner.

4. The work support device according to claim 2, wherein
the model manager is configured to generate the normal model or the abnormal model based on instructions from an operator or an administrator of the plant, in a case that the anomaly determiner cannot determine that the plant is normal or abnormal.

5. The work support device according to claim 3, wherein
the model manager is configured to update the normal model or the abnormal model, which has been already generated, based on instructions from an operator or an administrator of the plant, in a case that the anomaly determiner cannot determine that the plant is normal or abnormal.

6. The work support device according to claim 1, wherein
the data obtained from the plant includes a first data obtained from a device installed in the plant and a second data obtained from a terminal device operated by a worker who works in the plant.

7. The work support device according to claim 6, wherein
the model manager is configured to manage at least one of the normal model and the abnormal model, to which the second data is added.

8. The work support device according to claim 1, further comprising:
a task force manager configured to generate a virtual space in which members, who are engaged in a work which is necessary for operating the plant, communicate with each other by using the data managed by the data manager, the task force manager being configured to display the virtual space on a terminal device which is operated by the member.

9. The work support device according to claim 8, wherein
the task force manager comprises:
a timeline processor configured to display, in the virtual space, contents of communications conducted by the members;
a procedure manual generator configured to generate a procedure manual, which represents a procedure of a work conducted in the plant, based on instructions from the members while displaying the procedure manual in the virtual space; and
a log storage that stores the contents of the communications and the procedure manual which are displayed in the virtual space.

10. The work support device according to claim 8, wherein
the task force manager is configured to display, in the virtual space, an image or an avatar which shows an appearance of the member.

11. The work support device according to claim 8, wherein
the task force manager is configured to display, in the virtual space, a map in which information indicating a position of the member and information indicating a situation of circumference of the member are superimposed.

12. A work support method comprising:
managing, by a data manager, data obtained from a plant;
determining, by an anomaly determiner, a possibility of an abnormality of the plant by using data managed by the data manager, a normal model representing a normal state of the plant, and an abnormal model representing an abnormal state of the plant; and
notifying, by an anomaly notifier, to outside a determination result of the anomaly determiner.

13. The work support method according to claim 12, further comprising:
generating, by the model manager, the normal model or the abnormal model based on the determination result of the anomaly determiner.

14. The work support method according to claim 12, further comprising:
updating, by the model manager, the normal model or the abnormal model, which has been already generated, based on the determination result of the anomaly determiner.

15. The work support method according to claim 12, further comprising:
generating, by a task force manager, a virtual space in which members, who are engaged in a work which is necessary for operating the plant, communicate with each other by using the data managed by the data manager; and
displaying, by the task force manager, the virtual space on a terminal device which is operated by the member.
